# EUROPEAN PATENT APPLICATION

(11) **EP 3 569 419 A1**
(43) Date of publication of application: **20.11.2019**
(21) Application number: 19174344.2
(22) Date of filing: 14.05.2019
(51) Int. Cl.: B41J 29/38, B41J 29/393, B41J 29/46

(54) **PRINTER**

(30) Priority: 14.05.2018 JP 2018093112
(71) Applicant: Toshiba Tec Kabushiki Kaisha, 141-8562 Tokyo (JP)
(72) Inventor: Nagata, Hiroto, Tokyo, 141-8562 (JP)
(74) Representative: Hoffmann Eitle

(57) **Abstract**

A printer comprises a printing section configured to print information on a paper based on input information; an error detection section configured to detect occurrence of an error; an error type determining section configured to determine whether the error detected by the error detection section is an error relating to a printing processing using the printing section; a printing notification section configured to drive the printing section to print contents of an error and a countermeasure against the error if the error type determining section determines that the error is not an error relating to the printing processing; a sound output section; and a sound notification section configured to drive the sound output section to notify contents of an error and a countermeasure against the error by sound if the error type determining section determines that the error is an error relating to the printing processing.

## Description

### CROSS-REFERENCE TO RELATED APPLICATION

This application is based upon and claims the benefit of priority from Japanese Patent Application No. 2018-093112, filed on May 14, 2018, the entire contents of which are incorporated herein by reference.

### FIELD

Embodiments described herein relate generally to a printer, system, and methods related thereto.

### BACKGROUND

In recent years, in a restaurant, order information, which relates to a commodity to be cooked and is received by using a handy terminal (HT), is transmitted via a server to a kitchen printer (KP) installed in a kitchen, and the order information is then output by the kitchen printer (e.g., through printing output, display output or sound output). A cook who works in the kitchen cooks a commodity ordered based on the order information output from the kitchen printer.

Incidentally, when an error such as clogging of a printing paper or a position abnormality of a cutter for cutting the printing paper occurs, the kitchen printer displays an error code indicating a type of the error on a display section provided thereon.

However, when the meaning of an error code is unknown, contents of the error indicated by the error code can be grasped by referring to a description or the like. Contents of an error indicated by a displayed error code can be grasped similarly even for a printer (e.g., a label printer) other than the kitchen printer.

### SUMMARY OF THE INVENTION

One of the objects of the present invention is to improve prior art techniques and overcome at least some of the prior art problems as for instance above illustrated.

According to a first aspect of the invention, it is provided a printer, comprising: a printing section configured to print information on a paper based on input information; an error detection section configured to detect occurrence of an error; an error type determining section configured to determine whether the error detected by the error detection section is a printing error relating to a printing processing using the printing section or a non-printing error; a printing notification section configured to perform printing notification by driving the printing section to print contents of the error and a countermeasure against the error if the error type determining section determines that the error is the non-printing error; a sound output section; and a sound notification section configured to perform sound notification by driving the sound output section to notify contents of the error and a countermeasure against the error by sound if the error type determining section determines that the error is the printing error.

Optionally, in the printer according to the first aspect of the invention, the error type determining section determines whether the error is the printing error based on an error code indicating a type of the error detected by the error detection section.

Optionally, in the printer according to the first aspect of the invention, the error type determining section determines whether the error is a voltage printing error indicating that a voltage sufficient for an appropriate printing processing is not applied after determining that the error is the printing error, and if the error type determining section determines that the error is the voltage printing error, the printing notification section performs printing notification in addition to the sound notification by the sound notification section.

Optionally, in the printer according to the first aspect of the invention, the error type determining section determines whether the error is a voltage printing error indicating that a voltage sufficient for an appropriate printing processing is not applied after determining that the error is the printing error, and if the error type determining section determines that the error is the voltage printing error, the printing notification section performs printing notification in addition to the sound notification by the sound notification section.

Optionally, in the printer according to the first aspect of the invention, the error type determining section determines that the error is the voltage printing error, at least the sound notification section notifies a prompting message for taking the printer offline as the countermeasure by sound.

Optionally, in the printer according to the first aspect of the invention, the error type determining section determines whether the error detected by the error detection section is the printing error when an instruction to determine a type of the error is input.

Optionally, in the printer according to the first aspect of the invention, the printer is a kitchen printer.

According to a second aspect of the invention, it is provided an error processing method, comprising: detecting occurrence of an error associated with executing printing information on a paper; determining whether the error is a printing error relating to a printing processing or a non-printing error; printing a notification by printing contents of the error and a countermeasure against the error if the error is the non-printing error; and sounding a notification of the error and a countermeasure against the error if the error is the printing error.

Optionally, in the error processing method according to the second aspect of the invention, determining whether the error is the printing error is based on an error code indicating a type of the error detected.

Optionally, the error processing method according to the second aspect of the invention further comprises determining whether the error is a voltage printing error indicating that a voltage sufficient for an appropriate printing processing is not applied after determining that the error is the printing error, and if the error is the voltage printing error, printing a notification in addition to sounding the notification.

Optionally, the error processing method according to the second aspect of the invention further comprises determining whether the error is a voltage printing error indicating that a voltage sufficient for an appropriate printing processing is not applied after determining that the error is the printing error, and if the error is the voltage printing error, printing a notification in addition to sounding the notification.

Optionally, the error processing method according to the second aspect of the invention further comprises if the error is the voltage printing error, notifying a prompting message by sound for taking the printing offline as the countermeasure.

Optionally, the error processing method according to the second aspect of the invention further comprises determining whether the error is the printing error when an instruction to determine a type of the error is input.

According to a third aspect of the invention, it is provided an ordering system comprising a wireless portable terminal configured to receive ordering information and send the ordering information to a server; the server configured to store the ordering information and send the ordering information to a printer; the printer configured to print the ordering information on a paper; an error detection section configured to detect occurrence of an error; an error type determining section configured to determine whether the error detected by the error detection section is a printing error relating to a printing processing using the printer or a non-printing error; a printing notification section configured to perform printing notification by driving the printer to print contents of the error and a countermeasure against the error if the error type determining section determines that the error is the non-printing error; a sound output section; and a sound notification section configured to perform sound notification by driving the sound output section to notify contents of the error and a countermeasure against the error by sound if the error type determining section determines that the error is the printing error.

Optionally, in the system according to the third aspect of the invention, the error type determining section determines whether the error is the printing error based on an error code indicating a type of the error detected by the error detection section.

Optionally, in the system according to the third aspect of the invention, the error type determining section determines whether the error is a voltage printing error indicating that a voltage sufficient for an appropriate printing processing is not applied after determining that the error is the printing error, and if the error type determining section determines that the error is the voltage printing error, the printing notification section performs printing notification in addition to the sound notification by the sound notification section.

Optionally, in the system according to the third aspect of the invention, the error type determining section determines whether the error is a voltage printing error indicating that a voltage sufficient for an appropriate printing processing is not applied after determining that the error is the printing error, and if the error type determining section determines that the error is the voltage printing error, the printing notification section performs printing notification in addition to the sound notification by the sound notification section.

Optionally, in the system according to the third aspect of the invention, if the error type determining section determines that the error is the voltage printing error, at least the sound notification section notifies a prompting message for taking the printer offline as the countermeasure by sound.

Optionally, in the system according to the third aspect of the invention, the error type determining section determines whether the error detected by the error detection section is the printing error when an instruction to determine a type of the error is input.

Optionally, in the system according to the third aspect of the invention, the system is a restaurant ordering system and the printer is a kitchen printer.

### DESCRIPTION OF THE DRAWINGS

Fig. 1 is a system diagram according to an embodiment;
Fig. 2 is a block diagram illustrating a hardware configuration of a server;
Fig. 3 is a perspective view illustrating an outer appearance of a kitchen printer;
Fig. 4 is a side sectional view illustrating a main internal structure of the kitchen printer;
Fig. 5 is a block diagram illustrating a hardware configuration of the kitchen printer;
Fig. 6 is a memory map illustrating a configuration of an error information area of the kitchen printer;
Fig. 7 is a flowchart depicting a flow of a control processing performed by the server;
Fig. 8 is a functional block diagram illustrating functional components of the kitchen printer; and
Fig. 9 is a flowchart depicting a flow of a control processing performed by the kitchen printer.

### DETAILED DESCRIPTION

In accordance with an embodiment, a printer comprises a printing section configured to print information on a paper based on input information; an error detection section configured to detect occurrence of an error; an error type determining section configured to determine whether the error detected by the error detection section is an error relating to a printing processing using the printing section; a printing notification section configured to perform printing notification by driving the printing section to print contents of an error and a countermeasure against the error if the error type determining section determines that the error is not an error relating to the printing processing; a sound output section; and a sound notification section configured to perform sound notification by driving the sound output section to notify contents of an error and a countermeasure against the error by sound if the error type determining section determines that the error is an error relating to the printing processing.

Hereinafter, a printer according to an embodiment is described with reference to the accompanying drawings. In the embodiment, a kitchen printer is described as an example of a printer. The present invention is not limited by the embodiment described below.

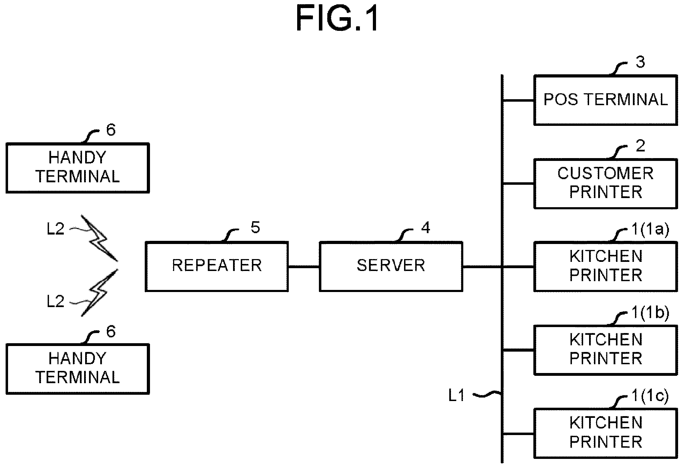

Fig. 1 is a system diagram illustrating a system according to the present embodiment. This system is installed in eating and drinking establishments such as a restaurant, a tavern and the like. This system is used to cook a commodity in a kitchen and arrange the ready-made commodity to a customer based on order information relating to a commodity (i.e., dish) contained in food and drink received from a customer who visited the eating and drinking establishment.

As shown in Fig. 1, in this system, a plurality of kitchen printers 1 (three in the embodiment), a customer printer 2 and a POS (Point Of Sale) terminal 3 are communicably connected to a server 4 via a communication line L1 such as a LAN (Local Area Network). A repeater 5 is connected to the server 4 via the communication line L1. A plurality of handy terminals 6 (two in the embodiment) is communicably connected to the repeater 5 via a wireless communication line L2.

The handy terminal 6 is a hand-held type computer that a store clerk who receives an order in the restaurant carries. The store clerk inputs information of a commodity ordered by a customer by operating the handy terminal 6. The handy terminal 6 transmits order information of the commodity which includes a commodity code which is commodity specifying information for specifying a commodity ordered by the customer to the server 4 via the repeater 5 based on the input commodity information .

The server 4 stores the order information received from the handy terminal 6 for each table to manage the order information, for example. The server 4 transmits the order information of the commodity to be cooked to the kitchen printer 1 and the customer printer 2 based on the order information received from the handy terminal 6. The order information includes information such as a commodity name and the number of ordered commodities. In this case, the server 4 classifies the ordered commodities and transmits the order information to a plurality of kitchen printers 1.

The kitchen printer 1 is installed, for example, in each kitchen for cooking. Therefore, according to the commodity included in the order information, the kitchen printer 1 installed closest to the kitchen where the commodity is cooked is specified. If the order information includes a plurality of commodities, a plurality of kitchen printers 1 may be specified.

Based on cooking termination information received from the kitchen printer 1, the server 4 transmits the cooking termination information indicating that the cooking of the commodity is terminated to the handy terminal 6. The handy terminal 6 receives the cooking termination information from the server 4 and displays the received cooking termination information.

If the server 4 receives information indicating that the kitchen printer 1 is in an error state from the designated kitchen printer 1, the server 4 retransmits the order information to another kitchen printer 1. The order information to be retransmitted includes information relating to the kitchen printer 1 in an error state and information indicating that the kitchen printer 1 is in an error state.

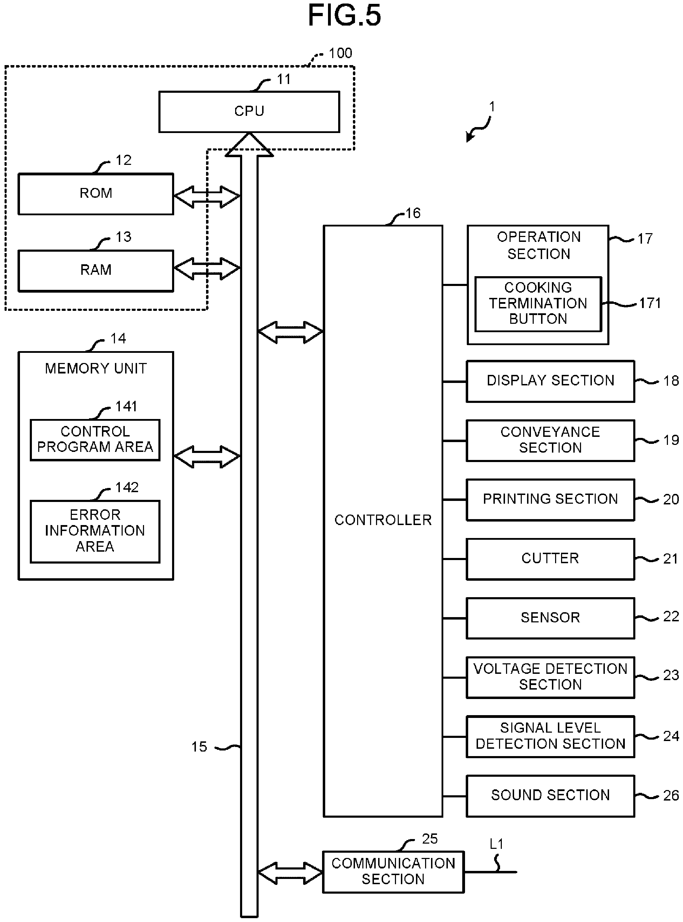

Based on the received order information, the kitchen printer 1 issues a slip on which the commodity name and the number of commodities included in the order information are printed. A cook cooks the commodity indicated by the commodity information printed on the issued slip. If the cooking is terminated, the cook operates a cooking termination button 171 (refer to Fig. 5) operated when cooking is terminated. The kitchen printer 1 transmits information indicating the termination of cooking to the server 4 for the finished commodity.

Since another kitchen printer 1 is in an error state, when the kitchen printer 1 issues a slip on which information relating to a commodity involved with another kitchen printer 1 is printed, the kitchen printer 1 prints a message indicating that another kitchen printer 1 is in an error state on the slip, together with the commodity name and the number of the commodities included in the order information. In the embodiment, three types of kitchen printers 1, i.e., a kitchen printer 1a, a kitchen printer 1b and a kitchen printer 1c are arranged as the kitchen printers 1. For example, a message indicating "the kitchen printer 1a is in an error state now" indicating that the kitchen printer 1a is in an error state is printed on the slip.

The customer printer 2 issues a slip on which commodity information and the number of commodities contained in the order information transmitted to the kitchen printer 1 are printed. The store clerk checks the issued slip to confirm the commodity to be delivered to the customer and the number of the commodities.

Based on the order information managed by the server 4, the POS terminal 3 executes a settlement processing of a commodity that the customer has eaten and drunk in a restaurant. The settlement processing is a processing of displaying a total amount of the commodity that the customer has eaten and drunk based on the order information, calculating and displaying a change amount based on a deposit amount received from the customer, and dispensing the change. The POS terminal 3 issues a receipt on which settlement information and commodity information (commodity name, price, etc.) of the commodity on which the settlement processing is performed are printed.

In such a system, a customer who enters the restaurant orders the commodity to eat and drink. The store clerk inputs commodity information of the commodity ordered by the customer by operating the handy terminal 6. The handy terminal 6 transmits the order information of the commodity to the server 4 based on the input commodity information. The server 4 stores the received order information, and meanwhile transmits the order information to the kitchen printer 1. The kitchen printer 1 issues a slip on which the commodity name and the number of the commodities contained in the received order information are printed. The cook cooks the commodity based on the slip. When cooking is terminated, the cook operates the cooking termination button in the kitchen printer 1. The kitchen printer 1 transmits information indicating the termination of cooking to the server 4. The server 4 transmits the information indicating the termination of cooking to the handy terminal 6. The handy terminal 6 displays the received information indicating the termination of cooking. A store clerk who carries the handy terminal 6 looks at the display and arranges the cooked commodity to the customer.

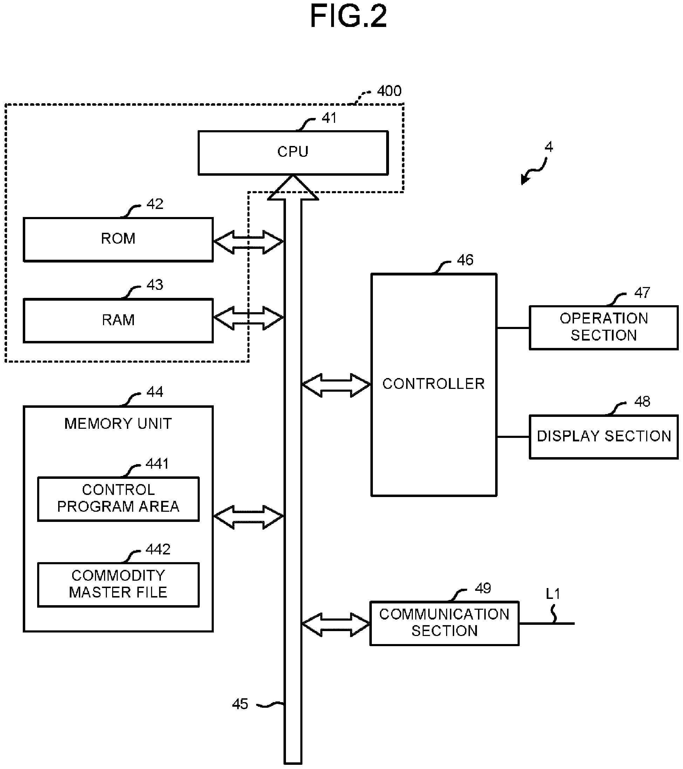

Next, the hardware configuration of the server 4 is described. Fig. 2 is a block diagram illustrating a hardware configuration of the server 4. As shown in Fig. 2, the server 4 includes a CPU (Central Processing Unit) 41, a ROM (Read Only Memory) 42, a RAM (Random Access Memory) 43, a memory unit 44, and the like. The CPU 41 is a main control unit. The ROM 42 stores various programs. The RAM 43 copies or decompresses programs and various kinds of data. The memory unit 44 stores various programs. The CPU 41, the ROM 42, the RAM 43 and the memory unit 44 are connected to each other via a bus 45. The CPU 41, the ROM 42 and the RAM 43 constitute a control section 400. Specifically, the CPU 41 executes a control program stored in the ROM 42 or the memory unit 44 and copied or decompressed in the RAM 43, and in this way, the control section 400 executes a processing of controlling the later-described server 4.

The memory unit 44 is a nonvolatile memory such as an HDD (Hard Disk Drive) or a flash memory in which storage information can be held even when the power thereof is turned off. The memory unit 44 includes a control program area 441 and a commodity master file 442. The control program area 441 stores a control program for controlling the server 4. The commodity master file 442 stores commodity information of a commodity in association with each commodity code used for specifying the commodity.

The control section 400 is connected to an operation section 47 and a display section 48 via the bus 45 and a controller 46. The operation section 47 is a keyboard. The display section 48 is a liquid crystal display, for example, and displays information to a store clerk who operates the server 4.

The control section 400 is connected to a communication section 49 via the bus 45. The communication section 49 is communicably connected to the kitchen printer 1, the customer printer 2, the POS terminal 3 and the repeater 5 via the communication line L1.

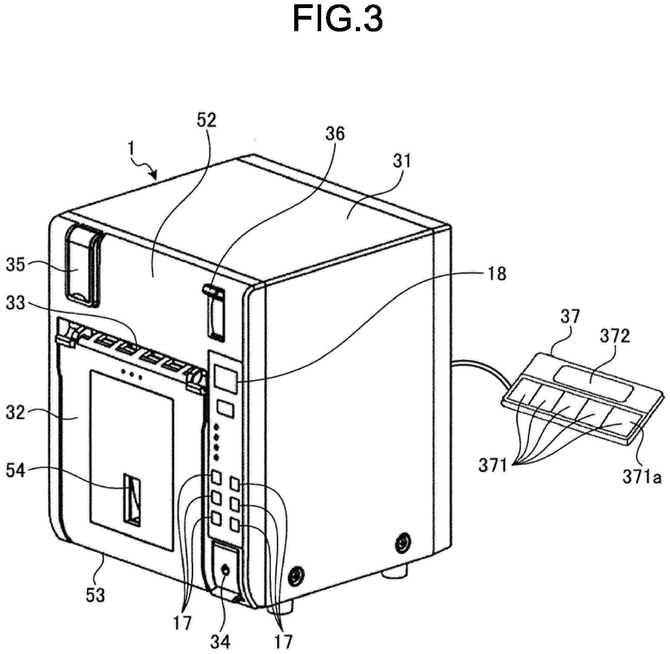

The kitchen printer 1 is described below. Fig. 3 is a perspective view illustrating an outer appearance of the kitchen printer 1. As shown in Fig. 3, the kitchen printer 1 includes a main body 31 and a cover 32. The main body 31 has a substantially cubic shape. The cover 32 is provided on a front surface 52 of the main body. The cover 32 is openable with respect to the main body 31 with a lower side 53 on the front surface side of the main body as a pivot point. Fig. 3 shows a state in which the cover 32 is closed with respect to the main body 31.

The kitchen printer 1 includes an operation section 17, a display section 18 and a power switch 34 at the right side end of the front surface 52. The operation section 17 is provided with a plurality of buttons including the later-described cooking termination button 171 and a switching button (not shown) for switching an on-line state and an off-line state of the kitchen printer 1. The display section 18 is, for example, an indicator having a seven segment, and displays an error code indicating the type of an error occurring in the kitchen printer 1. The power switch 34 is operated to turn on or turn off a power supply of the kitchen printer 1.

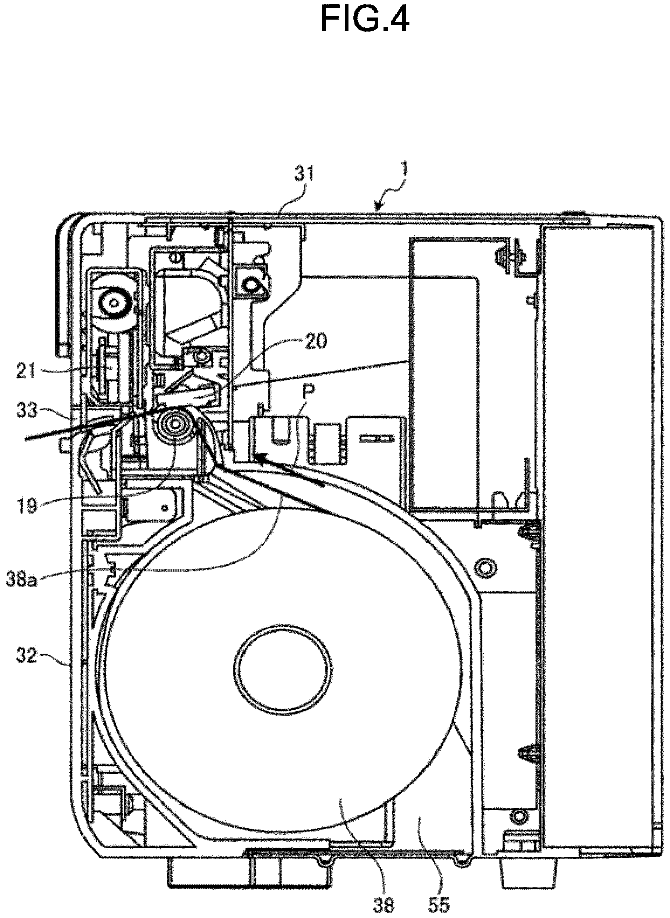

The kitchen printer 1 includes an opening/closing portion 35 and a lever 36 on the upper side of the front surface 52. The opening/closing portion 35 is a lid that is rotatable upward with respect to the main body 31. When the opening/closing portion 35 is rotated upward, a gear (not shown) formed in the kitchen printer 1 can be seen. The gear can be rotated manually. If the gear is rotated manually, a movable blade (not shown) which is a part of a cutter 21 (refer to Fig. 4) described later can be moved in a paper cutting direction and a direction opposite to the paper cutting direction. For example, when the movable blade is not positioned at a home position, or when a paper jam occurs near the cutter 21, it is possible to deal with the above problems by moving the movable blade by rotating the gear in one direction. The lever 36 is operated when the cover 32 is opened with respect to the main body 31.

The kitchen printer 1 is provided with a discharge port 33 in a gap between the main body 31 and an upper end of the cover 32 in the closed state. The kitchen printer 1 discharges a paper such as the printed slip from the discharge port 33 to the outside. The kitchen printer 1 is provided with a transparent window 54 at the substantially center of the cover 32. The window 54 is arranged to confirm a remaining amount of a roll paper 38 (refer to Fig. 4) mounted in the kitchen printer 1 from the outside.

The kitchen printer 1 has a connection terminal (not shown) for connecting an external keyboard 37 on a back side thereof. The external keyboard 37 includes a plurality of keys 371 and a display section 372. The key 371 is provided with a special key different from the keys arranged in the operation section 17. For example, the key 371 includes a key for maintenance of the kitchen printer 1, and a key 371a for notifying contents of a later-described error and a countermeasure against the error by performing printing or issuing sound. The external keyboard 37 is connected to the kitchen printer 1 to be used in such a special operation.

Next, the internal structure of the kitchen printer 1 is described. Fig. 4 is a side sectional view illustrating a main internal structure of the kitchen printer 1. As shown in Fig. 4, a storage section 55 is formed. The storage section 55 stores an elongated paper 38 wound in a roll. The paper 38 can be placed in the kitchen printer 1 with the cover 32 opened forward (towards the left side in Fig. 4) . Thereafter, when the cover 32 is closed, the paper 38 is rotatably held by the kitchen printer 1. The paper 38, which is a thermal paper, develops visually identifiable color (e.g., black) when heated.

The kitchen printer 1 further includes a printing section 20 and a conveyance section 19 on a path of the paper 38 pulled out. The printing section 20 includes a thermal head in which heat generating elements are arranged in a line. The conveyance section 19 is a rotatable platen. The printing section 20 and the conveyance section 19 are energized to each other to contact with each other. The paper 38 pulled out from the storage section 55 is sandwiched between the printing section 20 and the conveyance section 19. The conveyance section 19 is rotated as a motor (not shown) rotates to convey the paper 38 pulled out in a direction indicated by an arrow P. The printing section 20 prints information on a surface of the sandwiched paper 38 as the heat generating element thereof generates heat. The printing section 20 prints information on the paper 38 based on the information received by a communication section 25 (refer to Fig. 5).

The kitchen printer 1 includes the cutter 21 on a downstream side of a conveyance direction of the paper 38 with respect to the printing section 20. The cutter 21 has a fixed blade and the movable blade, and cuts the paper 38 printed by the printing section 20 as the movable blade moves towards the fixed blade. The cut paper 38 is discharged from a discharge port 33 to the outside as a slip.

The hardware configuration of the kitchen printer 1 is described below. Fig. 5 is a block diagram illustrating the hardware configuration of the kitchen printer 1. As shown in Fig. 5, the kitchen printer 1 includes a CPU 11, a ROM 12, a RAM 13, a memory unit 14, and the like. The CPU 11 is a main control unit. The ROM 12 stores various programs. The RAM 13 copies or decompresses programs and various kinds of data. The memory unit 14 stores various programs. The CPU 11, the ROM 12, the RAM 13 and the memory unit 14 are connected to each other via a bus 15. The CPU 11, the ROM 12 and the RAM 13 constitute a control section 100. Specifically, the CPU 11 executes a control program stored in the ROM 12 or the memory unit 14 and copied or decompressed in the RAM 13, and in this way, the control section 100 executes a processing of controlling the later-described kitchen printer 1.

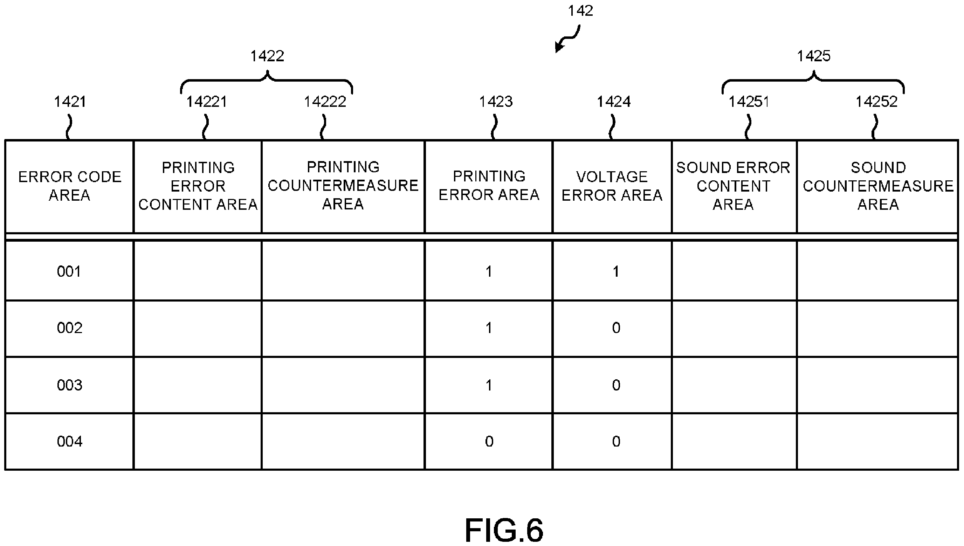

The memory unit 14 is a nonvolatile memory such as an HDD or a flash memory in which storage information can be held even when the power thereof is turned off. The memory unit 14 includes a control program area 141 and an error information area 142. The control program area 141 stores a control program for controlling the kitchen printer 1. The error information area 142 is described later with reference to Fig. 6.

The control section 100 is connected to the operation section 17, the display section 18, the conveyance section 19, the printing section 20, the cutter 21, a sensor 22, a voltage detection section 23, a signal level detection section 24 and a sound section 26 via the bus 15 and a controller 16. The sensor 22 includes, for example, a sensor for detecting whether there is the paper 38, a sensor for detecting whether the movable blade of the cutter 21 is positioned at the home position, a sensor for detecting a paper jam in the cutter 21, a sensor for detecting opening of the cover 32, and the like. The sensor 22 may include many other sensors. The sound section 26 includes a speaker, for example, and notifies information by issuing sound. It is necessary to apply a voltage of 24 V to the printing section 20 to make notification by performing printing. On the other hand, in order to make notification by issuing sound, a voltage of 5 V may be applied to the sound section 26.

The voltage detection section 23 detects a level of a voltage applied to the printing section 20. In order to perform printing on the paper 38 by the printing section 20, it is necessary to apply an appropriate voltage (the voltage level of about 24 V is appropriate) to the printing section 20 to cause the heat generating element to generate heat. If the voltage level is not appropriate (e.g., the voltage level is low), the heat generating element does not generate heat to an appropriate temperature. Therefore, since the printing section 20 cannot apply the appropriate heat to the paper 38, the paper 38 does not develop color at a visible level. Therefore, the voltage detection section 23 detects whether the voltage having an appropriate voltage level is applied to the printing section 20. The voltage detection section 23 may also detect (estimate) whether an appropriate voltage level (about 24 V) is applied to the printing section 20 by measuring a power supply voltage.

The signal level detection section 24 measures a level of a signal input to the communication section 25 described later to detect whether the input signal has an appropriate strength (signal level is appropriate). For example, if the communication line L1 is disconnected in the middle, the signal level is lowered or the signal is blocked, and as a result the kitchen printer 1 may not be able to receive the order information from the server 4 in some cases. Therefore, the signal level detection section 24 measures the signal level to detect whether the signal level is appropriate.

The control section 100 is connected to the communication section 25 via the bus 15. The communication section 25 is communicably connected to the server 4, the customer printer 2, the POS terminal 3 and the repeater 5 via the communication line L1. The communication section 25 inputs, for example, the order information via the communication line L1.

Next, the error information area 142 is described. Fig. 6 is a memory map illustrating the structure of the error information area 142. Information indicating contents of an error and information indicating a countermeasure against the error as the information to be printed on the paper 38 by the printing section 20 are stored in the error information area 142 in association with each error code indicating the type of the error. Information indicating contents of an error and information indicating a countermeasure against the error as the information to be notified by sound by the sound section 26 are stored in the error information area 142 in association with each error code indicating the type of the error.

The error information area 142 includes an error code area 1421, a printing error information area 1422, a printing error area 1423, a voltage error area 1424 and a sound error information area 1425. The error code area 1421 stores an error code for specifying the type of the error. The printing error information area 1422 includes a printing error content area 14221 and a printing countermeasure area 14222. The printing error content area 14221 stores the information indicating contents of an error occurring in the printing by the printing section 20. For example, the printing error content area 14221 stores information indicating the content of the error occurring in the printing by the printing section 20, such as "There is no paper". The printing countermeasure area 14222 stores a countermeasure against the error occurring in the printing by the printing section 20. For example, the printing countermeasure area 14222 stores a countermeasure against the error occurring in the printing by the printing section 20, such as "Please open the cover and insert the paper".

The printing error area 1423 stores information indicating whether or not an error identified by the error code stored in the error code area 1421 is an error relating to the printing processing. The error relating to the printing processing refers to an error that prevents the printing section 20 from printing information on the paper 38. For example, when an error that there is no paper 38, an error that the movable blade of the cutter 21 is not positioned at the home position, a paper jam error that a paper jam occurs in the cutter 21, a cover opening error that the cover 32 is opened, a voltage level error that the level of the voltage applied to the printing section 20 is low, or the like occurs, the kitchen printer 1 is in a state in which the printing or the paper feeding cannot be performed, and thus, the above errors belongs to the error relating to the printing processing. On the other hand, a signal level error that the signal level of the input signal is low is not an error relating to the printing processing, because the printing and the paper conveyance are enabled.

In the embodiment, the printing error area 1423 stores a flag "1" when the error specified by the error code is the error relating to the printing processing. The printing error area 1423 stores a flag "0" when it is not the error relating to the printing processing.

The voltage error area 1424 stores information indicating whether or not the error specified by the error code stored in the error code area 1421 is an error relating to the level of the voltage applied to the printing section 20. In the embodiment, the voltage error area 1424 stores a flag "1" if it is an error relating to the level of the voltage applied to the printing section 20. The voltage error area 1424 stores a flag "0" when it is not an error relating to the level of the voltage applied to the printing section 20.

The sound error information area 1425 has a sound error content area 14251 and a sound countermeasure area 14252. The sound error content area 14251 stores information indicating contents of an error to be notified by sound by the sound section 26. For example, the sound error content area 14251 stores information indicating contents of an error such as "There is no paper" to be notified by sound by the sound section 26. The sound countermeasure area 14252 stores information indicating a countermeasure against an error to be notified by sound by the sound section 26. For example, the sound countermeasure area 14252 stores information indicating a countermeasure against the error such as "Please open the cover and insert the paper" to be notified by sound by the sound section 26.

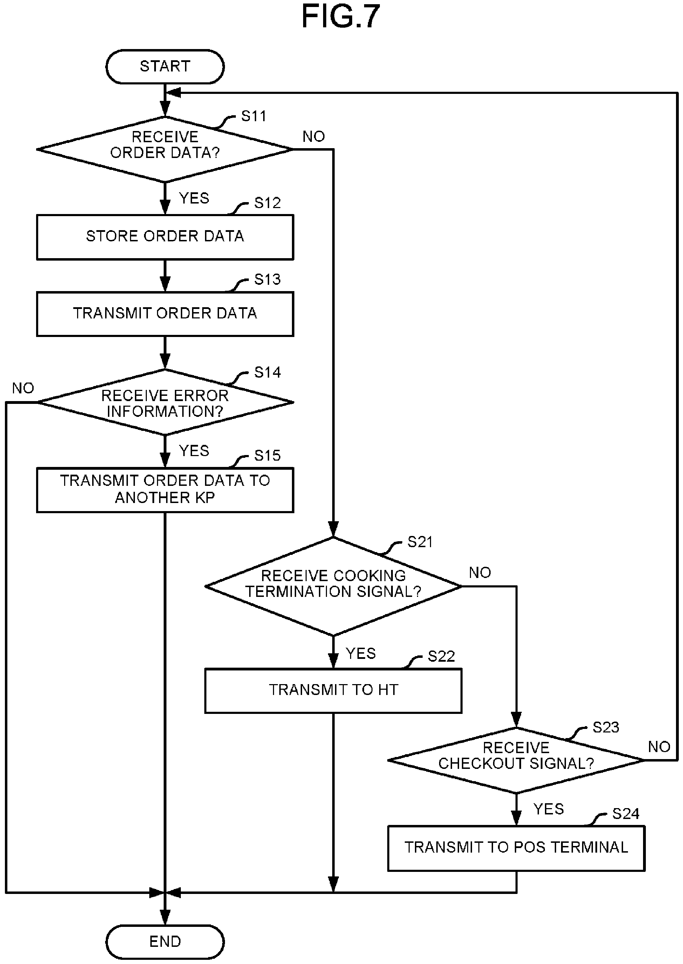

Below, the control of the server 4 is described. Fig. 7 is a flowchart depicting the flow of a control processing performed by the server. As shown in Fig. 7, the control section 400 determines whether the order information is received from the handy terminal 6 (S11). If it is determined that the order information is received from the handy terminal 6 (Yes in S11), the control section 400 stores the received order information in the RAM 43 (S12). Next, the control section 400 transmits the order information stored in the RAM 43 to the kitchen printer 1 (S13). The control section 400 determines the type of the ordered commodity based on the commodity code included in the order information and transmits the order information to the kitchen printer 1 located closest to the kitchen where the commodity is cooked in S13.

Next, the control section 400 determines whether the error information is received from the kitchen printer 1 that transmitted the order information (S14). If it is determined that the error information is received from the kitchen printer 1 (Yes in S14), the control section 400 transmits the order information stored in S12 to another kitchen printer 1 (S15) . In S15, the control section 400 transmits the information for specifying the kitchen printer 1 that transmitted the error information (in the embodiment, the kitchen printer 1 which is one of the kitchen printer 1a, the kitchen printer 1b and the kitchen printer 1c and from which the server 4 receives the error information) and the message information indicating that the kitchen printer 1 is in an error state. Then, the control section 400 terminates this processing. If it is determined that no error information is received from the kitchen printer 1 (No in S14), the control section 400 terminates this processing.

On the other hand, if it is determined that no order information is received from the handy terminal 6 (No in S11), the control section 400 determines whether the cooking termination signal is received from the kitchen printer 1 (S21) . If it is determined that the cooking termination signal is received from the kitchen printer 1 (Yes in S21), the control section 400 transmits a signal indicating the termination of the cooking to the handy terminal 6 that transmitted the order information of the cooked commodity (S22) . The control section 400 then terminates this processing.

If it is determined that no cooking termination signal is received from the kitchen printer 1 (No in S21), the control section 400 determines whether a checkout signal is received from the handy terminal 6 (S23). If it is determined that the checkout signal is received from the handy terminal 6 (Yes in S23), the control section 400 acquires the commodity information (commodity name, price, etc.) of the ordered commodity from the commodity master file 442 based on the commodity code included in the order data stored in S12, and transmits the commodity information of the commodity relating to the order to the POS terminal 3 (S24). The control section 400 then terminates this processing. On the other hand, if it is determined that no checkout signal is received from the handy terminal 6 (No in S23), the control section 400 returns to the processing in S11 to stand by.

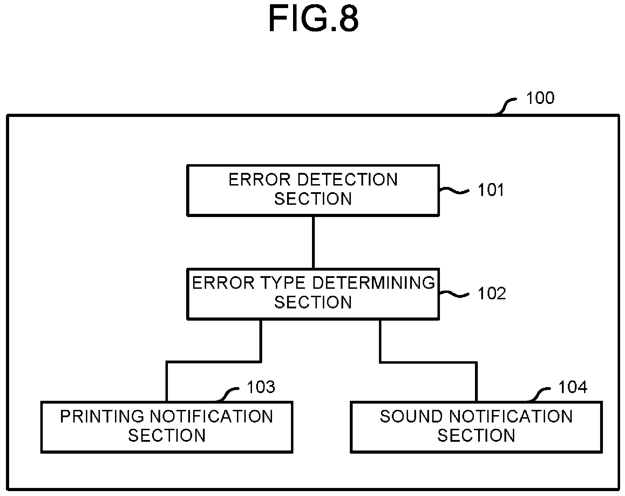

The functional components of the kitchen printer 1 are described below. Fig. 8 is a functional block diagram illustrating the functional components of the kitchen printer. As shown in Fig. 8, the control section 100 functions as an error detection section 101, an error type determining section 102, a printing notification section 103 and a sound notification section 104.

The error detection section 101 detects an error occurring in the kitchen printer 1 based on an output of detection results by various sensors. For example, the error detection section 101 detects a paper absence error if the sensor for detecting whether there is the paper 38 detects that there is no paper. The error detection section 101 detects a cutter error if the sensor for detecting whether the movable blade of the cutter 21 is positioned at the home position detects that the movable blade is not positioned at the home position. The error detection section 101 detects a paper jam error if the sensor for detecting a paper jam in the cutter 21 detects a paper jam. The error detection section 101 detects a cover opening error if the sensor for detecting the opening of the cover 32 detects opening of the cover 32. The error detection section 101 detects a voltage level error if the voltage detection section 23 detects that the level of the voltage applied to the printing section 20 is not appropriate (e.g., the voltage level is low). The error detection section 101 detects a signal level error if the signal level detection section 24 detects that the level of the input signal is not appropriate (e.g., the signal level is low) . The error detection section 101 generates an error code indicating the type of the detected error. For example, if the sensor for detecting whether there is the paper 38 detects that there is no paper, the error detection section 101 generates an error code indicating the paper absence error. The error detection section 101 determines whether occurrence of an error is detected in the kitchen printer 1.

The error type determining section 102 determines whether the error detected by the error detection section 101 is an error relating to the printing processing. The error type determining section 102 searches whether the flag "1" indicating that the error is the printing error is stored in the printing error area 1423 corresponding to the error code generated by the error detection section 101, and determines whether the error is the error relating to the printing processing. If it is determined that the error is the error relating to the printing processing, the error type determining section 102 determines whether the error is an error relating to the voltage level. The error type determining section 102 searches whether the flag "1" indicating that the error is the voltage level error is stored in the voltage error area 1424 corresponding to the error code generated by the error detection section 101, and determines whether the error is the error relating to the voltage level.

When the error type determining section 102 determines that the error detected by the error detection section 101 is not the error relating to the printing processing, the printing notification section 103 controls the conveyance section 19 and the printing section 20 to make notification by printing the information indicating the contents of the error and information indicating the countermeasure against the error on the paper 38. The printing notification section 103 reads the contents of the error to be printed from the printing error content area 14221 and makes notification by printing the contents on the paper 38. The printing notification section 103 reads out the countermeasure against the error to be printed from the printing countermeasure area 14222 and makes notification by printing the contents on the paper 38. When the error type determining section 102 determines that the error is the error relating to the voltage level, the printing notification section 103 controls the conveyance section 19 and the printing section 20 to make notification by printing the information indicating the contents of the error and the countermeasure against the error on the paper 38.

When the error type determining section 102 determines that the error is the error relating to the printing processing, the sound notification section 104 controls the sound section 26 to notify the contents of the error and the countermeasure against the error by sound (sound notification). The sound notification section 104 reads out the contents of an error to be notified by sound from the sound error content area 14251 and notifies the contents by sound. The sound notification section 104 reads out the countermeasure against the error to be notified by sound from the sound countermeasure area 14252 and notifies it by sound. The sound notification section 104 notifies the countermeasure against the error one step at a time by sound according to the order of the countermeasure each time a predetermined button of the operation section 17 is operated. When the error type determining section 102 determines that the error is the error relating to the voltage level, the sound notification section 104 controls the sound section 26 to notify the information indicating the contents of the error and the countermeasure against the error by sound.

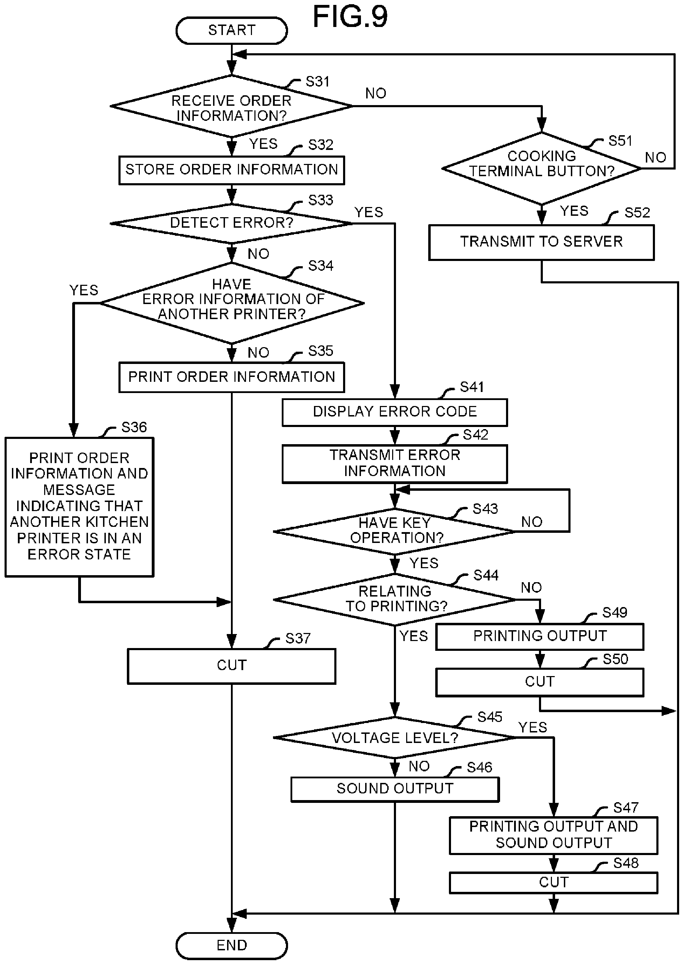

The control of the kitchen printer 1 is described below. Fig. 9 is a flowchart depicting the flow of the control processing performed by the kitchen printer. As shown in Fig. 9, the control section 100 determines whether the order information is received from the server 4 (S31) . If it is determined that the order information is received from the server 4 (Yes in S31), the control section 100 stores the received order information in the RAM 13 (S32).

Next, it is determined whether occurrence of an error in the kitchen printer 1 is detected by the error detection section 101 (S33) . If it is determined that the error detection section 101 does not detect the occurrence of the error (No in S33), the control section 100 determines whether the received order information is information required to be printed by another kitchen printer 1 at fist (S34). If the received order information includes information indicating that another kitchen printer 1 is abnormal, the control section 100 determines that the order information is the information required to be printed by another kitchen printer 1 at fist. If it is determined that the order information is not the information required to be printed by another kitchen printer 1 (No in S34), the control section 100 controls the printing section 20 to print the order information on the paper 38 based on the order information stored in S32 (S35) . Then, the control section 100 drives the cutter 21 to cut the slip on which the order information is printed (S37) . The control section 100 then terminates this processing.

If it is determined that the order information is the information required to be printed by another kitchen printer 1 at first in S34 (Yes in S34), the control section 100 controls the printing section 20 to print the order information and the information indicating that the kitchen printer 1 is in the abnormal state on the paper 38 based on the order information stored in S32 and the simultaneously received information indicating that the kitchen printer 1 is in the abnormal state (S36) . The control section 100 then executes the processing in S37.

If the error detection section 101 detects an error (Yes in S33), the control section 100 displays an error code used for specifying the type of the detected error and generated by the error detection section 101 on the display section 18 (S41) . The control section 100 transmits a message indicating occurrence of the error and the error code indicating the type of error to the server 4 (S42).

Next, the control section 100 determines whether the key 371a is operated to input instruction information for instructing to determine the type of the error (S43). The control section 100 stands by until the instruction information for instructing to determine the type of the error is input (No in S43) . If it is determined that the instruction information for instructing to determine the type of the error is input (Yes in S43), the error type determining section 102 determines whether the error detected by the error detection section 101 is the error relating to the printing processing (S44) . If the error type determining section 102 determines that the error is not the error relating to the printing processing (No in S44), the printing notification section 103 performs printing notification by driving the conveyance section 19 and the printing section 20 to print the information indicating the contents of the error and the countermeasure against the error on the paper 38. Then, the control section 100 drives the cutter 21 to cut the slip on which the order information is printed (S50) . The control section 100 then terminates this processing.

If the error type determining section 102 determines that the error is the error relating to the printing processing (Yes in S44), the error type determining section 102 then determines whether the error is the error relating to the voltage level (S45) . If the error type determining section 102 determines that the error is not the error relating to the voltage level (No in S45), the sound notification section 104 performs sound notification by driving the sound section 26 to notify the contents of the error and the countermeasure against the error by sound (S46). The control section 100 then terminates this processing.

If the error type determining section 102 determines that the error is the error relating to the voltage level (Yes in S45), the sound notification section 104 performs sound notification by driving the sound section 26 to notify the information indicating the contents of the error and the countermeasure against the error by sound (S47). At the same time, the printing notification section 103 performs printing notification by driving the conveyance section 19 and the printing section 20 to print information indicating the contents of the error and the countermeasure against the error on the paper 38 (S47) . Then, the control section 100 drives the cutter 21 to cut the slip on which the order information is printed (S48). The control section 100 then terminates this processing. In the case of Yes in S45, the reason why the printing cannot be performed is not a physical reason such as a paper jam of the paper 38 or the like. There is a case in which the voltage level may reach a level at which the printing on the paper 38 is enabled (i.e., a voltage level which is lower than 24 V which is the appropriate voltage and at which the printing is enabled) although the voltage level is low, and as a result, the control section 100 performs sound notification and the printing notification on the paper 38 at the same time for the contents of the error and the countermeasure against the error. This is because the contents of the error and the countermeasure against the error can be understood more easily by the printing notification as compared with the sound notification, and the printing notification is performed as much as possible. If the error type determining section 102 determines that the error is the error relating to the voltage level (Yes in S45), there is a possibility of a serious error requiring a service person, and thus, a message for prompting contact with a service person is also notified by sound or printing together with the countermeasure in the store. The message for prompting contact with a service person is, for example, "Please call the service person". At the same time, it is desirable that the printing notification section 103 and the sound notification section 104 notify a message for prompting to take the kitchen printer 1 offline or a massage for prompting to turn off the power of the kitchen printer 1 by sound or printing. It is desirable that at least the sound notification section 104 notifies a message for prompting to take the kitchen printer 1 offline or a massage for prompting to turn off the power of the kitchen printer 1 by sound.

If it is determined that the order information is not received from the server 4 in S31 (No in S31), the control section 100 determines whether the cooking termination button 171 is operated (S51) . If it is determined that the cooking termination button 171 is operated (Yes in S51), the control section 100 transmits the information indicating the termination of cooking for the cooked commodity to the server 4 (S52). The control section 100 then terminates this processing. If it is determined that the cooking termination button 171 is not operated (No in S51), the control section 100 returns to the processing in S31 to stand by.

According to the kitchen printer 1 of the present embodiment, when the kitchen printer 1 is in an error state, if the error is not the error relating to the printing processing, the control section 100 performs printing notification by driving the printing section 20 to print the contents of the error and the countermeasure on the paper 38, if the error is the error relating to the printing processing, the control section 100 performs sound notification by driving the sound section 26 to notify the contents of the error and the countermeasure by sound. Therefore, it is possible to easily grasp the contents of the error without confirming the specification or the like for the kitchen printer 1. When the error is the error relating to the printing processing, the notification is made by sound, and thus it is possible to grasp the contents of the error and the countermeasure even for the error that prevents the printing processing from being executed.

When the error is the error relating to the printing process and is also the error relating to the voltage level, the notification is made by printing and sound at the same time. Therefore, it is possible to easily grasp the contents of the error without checking the specification or the like. In the case in which the voltage level has not decreased that much, it is possible to perform printing on the paper.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention as defined by the appended claims.

For example, in the present embodiment, the kitchen printer 1 is described as an example of the printer. However, it is not limited to that, and the printer may be another type of printer such as a label printer.

In the present embodiment, an instruction signal is generated when the key 371a on the external keyboard is operated. However, it is not limited to that. For example, when a plurality of predetermined buttons on the operation section 17 is simultaneously operated, an instruction signal may be generated.

In the embodiment, if it is determined that the error is the error relating to the voltage level, the notification is made by both sound and printing. However, if it is determined that the error is the error relating to the voltage level, it may be notified only by sound.

The program to be executed by the kitchen printer 1 according to the embodiment may be recorded in a computer-readable recording medium such as a CD-ROM (compact disc read-only memory), an FD (Flexible Disk), a CD-R (compact disk-recordable), a DVD (Digital Versatile Disk) and the like in the form of installable or executable file to be provided.

Further, the program to be executed by the kitchen printer 1 according to the embodiment may be stored in a computer connected with a network such as the Internet and downloaded via the network to be supplied. The program to be executed by the kitchen printer 1 according to the embodiment may be provided or distributed via the network such as the Internet.

The program to be executed by the kitchen printer 1 according to the embodiment may be provided by being recorded in the ROM or the like in advance.

## Claims

1. A printer, comprising:
a printing section configured to print information on a paper based on input information;
an error detection section configured to detect occurrence of an error;
an error type determining section configured to determine whether the error detected by the error detection section is a printing error relating to a printing processing using the printing section or a non-printing error;
a printing notification section configured to perform printing notification by driving the printing section to print contents of the error and a countermeasure against the error if the error type determining section determines that the error is the non-printing error;
a sound output section; and
a sound notification section configured to perform sound notification by driving the sound output section to notify contents of the error and a countermeasure against the error by sound if the error type determining section determines that the error is the printing error.

2. The printer according to claim 1, wherein
the error type determining section determines whether the error is the printing error based on an error code indicating a type of the error detected by the error detection section.

3. The printer according to claim 1 or 2, wherein
the error type determining section determines whether the error is a voltage printing error indicating that a voltage sufficient for an appropriate printing processing is not applied after determining that the error is the printing error, and
if the error type determining section determines that the error is the voltage printing error, the printing notification section performs printing notification in addition to the sound notification by the sound notification section.

4. The printer according to claim 3, wherein
if the error type determining section determines that the error is the voltage printing error, at least the sound notification section notifies a prompting message for taking the printer offline as the countermeasure by sound.

5. The printer according to any of claims 1 to 4, wherein the error type determining section determines whether the error detected by the error detection section is the printing error when an instruction to determine a type of the error is input.

6. The printer according to any of claims 1 to 5, wherein the printer is a kitchen printer.

7. An error processing method, comprising:
detecting occurrence of an error associated with executing printing information on a paper;
determining whether the error is a printing error relating to a printing processing or a non-printing error;
printing a notification by printing contents of the error and a countermeasure against the error if the error is the non-printing error; and
sounding a notification of the error and a countermeasure against the error if the error is the printing error.

8. The error processing method according to claim 7, wherein determining whether the error is the printing error is based on an error code indicating a type of the error detected.

9. The error processing method according to claim 7 or 8, further comprising:
determining whether the error is a voltage printing error indicating that a voltage sufficient for an appropriate printing processing is not applied after determining that the error is the printing error, and
if the error is the voltage printing error, printing a notification in addition to sounding the notification.

10. The error processing method according to claim 9, further comprising:
if the error is the voltage printing error, notifying a prompting message by sound for taking the printing offline as the countermeasure.

11. The error processing method according to any of claims 7 to 10, further comprising:
determining whether the error is the printing error when an instruction to determine a type of the error is input.

12. An ordering system, comprising:
a wireless portable terminal configured to receive ordering information and send the ordering information to a server;
the server configured to store the ordering information and send the ordering information to a printer;
the printer configured to print the ordering information on a paper;
an error detection section configured to detect occurrence of an error;
an error type determining section configured to determine whether the error detected by the error detection section is a printing error relating to a printing processing using the printer or a non-printing error;
a printing notification section configured to perform printing notification by driving the printer to print contents of the error and a countermeasure against the error if the error type determining section determines that the error is the non-printing error;
a sound output section; and
a sound notification section configured to perform sound notification by driving the sound output section to notify contents of the error and a countermeasure against the error by sound if the error type determining section determines that the error is the printing error.

13. The system according to claim 12, wherein
the error type determining section determines whether the error is the printing error based on an error code indicating a type of the error detected by the error detection section.

14. The system according to claim 12 or 13, wherein
the error type determining section determines whether the error is a voltage printing error indicating that a voltage sufficient for an appropriate printing processing is not applied after determining that the error is the printing error, and
if the error type determining section determines that the error is the voltage printing error, the printing notification section performs printing notification in addition to the sound notification by the sound notification section.

15. The system according to any of claims 12 to 14, wherein the system is a restaurant ordering system and the printer is a kitchen printer.
